# FASCICULE DE BREVET EUROPEEN

(11) **EP 3 602 031 B1**
(45) Date de publication et mention de la délivrance du brevet: **29.04.2026**
(21) Numéro de dépôt: 18714319.3
(22) Date de dépôt: 15.03.2018
(51) Int. Cl.: G01N 29/14, B64F 5/00, G01M 15/12, G01N 29/24, G08G 5/00

(54) **PROCÉDÉ DE SURVEILLANCE DES MOTEURS D'UN AÉRONEF**
VERFAHREN ZUR ÜBERWACHUNG VON FLUGZEUGMOTOREN
METHOD FOR MONITORING AIRCRAFT ENGINES

(30) Priorité: 20.03.2017 FR 1752263
(43) Date de publication de la demande: 05.02.2020
(73) Titulaire: Safran Aircraft Engines, 75015 Paris (FR)
(72) Inventeur: PROST, François, 77550 Moissy-Cramayel (FR); BENSE, William, 77550 Moissy-Cramayel (FR); BLANCHARD,Serge, 77550 Moissy-Cramayel (FR)
(74) Mandataire: Gevers & Orès
(86) Numéro de dépôt international: PCT/FR2018/050621
(87) Numéro de publication internationale: WO 2018/172666

(56) Documents cités:
- DE-A1- 102010 017 938
- US-B1- 9 310 222
- MIXSON J S ET AL: "INVESTIGATION OF INTERIOR NOISE IN A TWIN-ENGINE LIGHT AIRCRAFT", JOURNAL OF AIRCRAFT, AIAA - AMERICAN INSTITUTE OF AERONAUTICS AND ASTRONAUTICS, INC, US, vol. 15, no. 4, 1 April 1978 (1978-04-01), pages 227 - 233, XP008068750, ISSN: 0021-8669

## Description

### 1. Domaine technique de l'invention

L'invention concerne le domaine de la surveillance et de la maintenance des aéronefs à moteur, tels que les avions.

### 2. Arrière-plan technologique

Il est connu de l'état de la technique de prévoir des capteurs de surveillance dans ou sur les moteurs des aéronefs, afin de détecter une anomalie éventuelle durant le vol de l'aéronef, et réaliser dans ce cas une opération de maintenance pour corriger cette anomalie une fois l'appareil au sol. Le brevet US 9 310 222 B1 enseigne un procédé pour déterminer la configuration de vol d'un aéronef pendant un vol, comprenant entre autres la détection des caractéristiques acoustiques de l'aéronef à partir d'au moins l'une des vibrations de la cellule et du bruit de l'aéronef, et la détermination de la configuration de l'aéronef à partir desdites caractéristiques acoustiques pour les configurations de l'aéronef, et l'annonce d'une configuration de l'aéronef différente de ladite configuration attendue de l'aéronef.

La demande publiée sous le n° FR3011936 enseigne par exemple que ces capteurs peuvent être placés sous la nacelle du moteur.

Les inconvénients d'un tel agencement sont notamment le coût, l'encombrement, la maintenance et le poids des capteurs et des interfaces nécessaires à l'exploitation des signaux obtenus par ces capteurs.

L'invention vise à pallier à ces inconvénients.

### 3. Exposé de l'invention

Pour ce faire, l'invention concerne un procédé de surveillance d'au moins un moteur d'un aéronef selon la revendication 1.

Ainsi, le procédé de surveillance selon l'invention utilise les capteurs déjà présents dans les appareils mobiles des passagers en cabine et évite ainsi le surcoût lié à l'ajout de nouveaux capteurs sur ou dans le moteur pour la mise en œuvre de leur surveillance. Le signal acquis par les capteurs est représentatif de paramètres physiques dans la cabine (bruits dans le cas où le capteur est un microphone, vibration et/ou accélération dans le cas où le capteur est un accéléromètre) à partir desquels on peut déduire l'activité vibratoire et/ou acoustique du moteur. L'utilisation d'une pluralité d'appareils mobiles améliore l'efficacité du procédé, notamment en permettant une meilleure localisation d'une éventuelle anomalie.

L'appareil mobile est un téléphone mobile, notamment de type ordiphone (*smartphone* en anglais), une tablette, un ordinateur portable, etc., capable d'exécuter des programmes d'ordinateurs, par exemple sous forme d'applications. Ces appareils mobile comprennent souvent par défaut au moins un micro, un accéléromètre et des moyens de communication avec un dispositif extérieur et/ou un réseau de communication (par exemple Wi-Fi ou réseau téléphonique), et sont transportés par de nombreux passagers dans les vols d'aéronefs dédiés à l'aviation civile commerciale. Ces aéronefs peuvent transporter des dizaines ou centaines de passagers dont une grande partie possède des appareils mobiles, ce qui peut permettre de traiter les données de dizaines ou centaines de capteurs supplémentaires par rapport à l'art antérieur.

Dans un mode de réalisation du procédé selon l'invention, le signal est un signal acoustique et le capteur est un microphone. Ce mode de réalisation est particulièrement avantageux car les microphones sont présents dans tous les appareils mobiles.

En variante, le signal est un signal représentatif de vibrations, et le capteur est un accéléromètre. Ce mode de réalisation est particulièrement avantageux car les accéléromètres sont présents dans beaucoup d'appareils mobiles.

Dans un mode de réalisation, les données sont obtenues à partir du signal par élimination des éléments du signal indépendants de l'activité du moteur, ce qui permet de simplifier les traitements réalisés par l'unité de traitement.

Le procédé selon l'invention peut avantageusement comprendre une étape d'émission des données par l'appareil mobile, par un canal radio, à destination d'une unité de traitement située au sol. Cela permet une mise en œuvre simple du procédé sans surcharger ou modifier le calculateur embarqué dans l'aéronef.

L'étape d'émission peut être réalisée lorsque l'avion est au sol, ce qui facilite la transmission des données avec les réseaux de communication au sol, ou bien un certain temps après le vol quand le passager a quitté l'avion, ou en général quand l'appareil mobile est reconnecté avec un réseau de communication après avoir quitté un mode dit « mode avion » dans lequel les communications sont coupées.

Selon un mode de réalisation, l'étape d'émission comprend l'émission d'un identifiant du vol, ce qui permet à l'unité de traitement de retrouver le vol durant lequel l'acquisition a eu lieu et donc l'aéronef pour lequel une maintenance des moteurs éventuelle est à réaliser.

L'étape d'émission peut être réalisée sur détection du canal radio par l'appareil mobile, ce qui permet d'automatiser l'étape d'émission.

Le canal radio est par exemple un réseau local hertzien, par exemple un réseau wifi.

L'invention concerne également un procédé caractérisé en combinaison par tout ou partie des caractéristiques mentionnées ci-dessus ou ci-après.

### 4. Liste des figures

D'autres buts, caractéristiques et avantages de l'invention apparaîtront à la lecture de la description suivante donnée à titre uniquement non limitatif et qui se réfère aux figures annexées dans lesquelles :

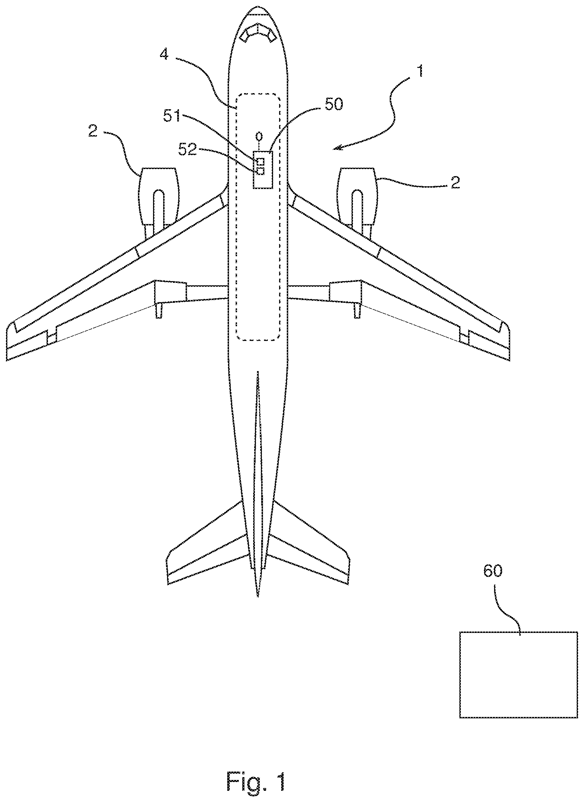

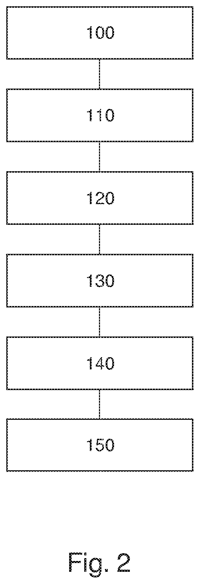

La figure 1 représente un aéronef, un appareil mobile et une unité de traitement configurés pour mettre en œuvre un procédé selon un mode de réalisation de l'invention. La figure 2 représente un procédé selon un mode de réalisation de l'invention.

### 5. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté.

À l'étape 100, un identifiant du vol d'un aéronef 1, par exemple un avion, est enregistré dans la mémoire de l'appareil mobile, ici un téléphone 50 mobile. L'identifiant du vol peut être saisi par l'utilisateur par l'intermédiaire de l'interface homme-machine du téléphone 50 (par exemple, par l'intermédiaire du clavier du téléphone), ou automatiquement via un billet électronique du passager sur le téléphone 50, ou via une application de suivi de vol, etc. L'identifiant du vol peut comprendre le numéro et/ou l'horaire du vol (heure de départ et/ou d'arrivée) et/ou l'aéroport de départ et/ou de destination. L'identifiant peut comprendre également un numéro de siège dans la cabine et/ou un identifiant du passager (nom prénom ou n° de carte de fidélité par exemple). L'identifiant peut aussi être obtenu d'un serveur par le téléphone mobile 50, par exemple par l'intermédiaire du réseau de téléphonie mobile et/ou du réseau internet. L'étape 100 peut avoir lieu au sol avant le vol, en vol ou après le vol.

Puis, à l'étape 110, durant le vol d'un aéronef 1 (et donc durant le fonctionnement des moteurs 2), au moins un téléphone mobile 50 dans la cabine des passagers 4 (le contour de la cabine des passagers à l'intérieur du cockpit est représenté en pointillé sur la figure 1), acquiert, au moyen de son propre capteur 52, un signal au moins en partie représentatif de l'activité des moteurs 2. Le signal peut être analogique ou digital. Le capteur 52 du téléphone mobile 50 peut être un microphone. Par exemple, il peut s'agir du microphone utilisé pour acquérir la voix de l'utilisateur lors des communications téléphoniques. Le signal est dans ce cas de nature acoustique. Le capteur 52 peut être un accéléromètre. Par exemple, il peut s'agir du capteur utilisé pour acquérir l'orientation du téléphone pour orienter (verticalement ou horizontalement) l'affichage sur l'écran du téléphone. Le signal est par exemple dans ce cas représentatif de vibrations. L'étape d'acquisition peut être initiée et/ou interrompue automatiquement, par le téléphone mobile 50, à l'heure prévue respectivement par l'horaire de départ et/ou d'arrivée du vol, ou en fonction de phases prédéfinies du vol (décollage, vol de croisière, atterrissage, etc.). Elle peut être aussi initiée et/ou interrompue par l'utilisateur (qui est alors aussi un passager voyageant dans la cabine 4) par l'intermédiaire de l'interface homme machine du téléphone mobile 50. Par exemple, l'acquisition est initiée lorsque l'utilisateur fait passer son téléphone en mode avion (mode où les connexions aux réseaux de téléphonie et/ou à l'internet sans fil (3G et/ou Wifi) du téléphone sont coupées) et/ou interrompue lorsque l'utilisateur fait sortir son téléphone du mode avion (i.e. lorsque les connexions précitées sont réactivées). L'acquisition peut également être initiée et/ou interrompue sur réception par le téléphone mobile 50 d'un message reçu depuis l'unité de traitement, par exemple par l'intermédiaire du réseau de téléphonie mobile. L'utilisateur peut également saisir ses impressions (c'est-à-dire un texte représentant ses impressions) sur le vol par l'intermédiaire de l'interface homme machine du téléphone mobile 50.

À l'étape 120, des données représentatives de l'activité du moteur sont obtenues à partir du signal par le téléphone 50. Lorsque le capteur 52 est un microphone, les données sont représentatives des bruits émis par le moteur, et sont extraites du signal par un traitement visant à éliminer les bruits dans la cabine qui ne proviennent pas du moteur (par exemple, les conversations des passagers, ou le bruit engendré par le système d'air conditionné). Les données sont par exemple mémorisées dans la mémoire du téléphone 50 au moins jusqu'à l'étape 140. Selon d'autres modes de réalisation, l'extraction des données relatives au moteur du signal n'est pas faite sur le téléphone mais ultérieurement.

Les bruits émis par le moteur sont différenciés des autres bruits de la cabine par exemple par bande passante (différence entre bande passante spécifique moteur et bande passant spécifique des voix des passagers par exemple), ou par corrélation entre les bruits reçus par tous les téléphones/appareils mobiles. Il en va de même pour les vibrations. En outre, les bruits « normaux » et « anormaux » des moteurs sont connus et la recherche de ces bruits dans le spectre est simplifiée. L'écoute de tous les téléphones/appareils mobiles dans les conditions normales permet aussi d'améliorer les détections des conditions anormales et des bruits parasites (qui sont davantage variables d'un vol à l'autre). Les vibrations qui concernent le moteur sont aussi extraites d'autres types de vibrations, comme les vibrations dues au roulement de l'avion sur la piste, des mouvements du train et des élevons, de l'APU, du système de conditionnement d'air, etc.

Ces bruits/vibrations sont extraits par traitement du signal classique.

À l'étape 130, le téléphone mobile 50 détecte un canal radio. Il peut s'agir d'un réseau local hertzien, par exemple un réseau wifi.

À l'étape 140, le téléphone mobile 50 émet, à destination de l'unité de traitement 60 qui est située au sol (et pas dans l'avion), les données et l'identifiant du vol, par l'intermédiaire du canal radio. Préalablement à cette émission, le téléphone mobile aura, dans un mode de réalisation, numérisé et compressé le signal ou les données. L'étape 140 intervient par exemple après le vol, une fois l'avion posé au sol. L'émission peut être réalisée par l'intermédiaire d'une borne wifi, par exemple située dans l'aéroport. L'émission peut être déclenchée automatiquement sur repérage de cette borne wifi par le téléphone. L'émission peut emprunter en outre le réseau internet par exemple si l'unité de traitement 60 n'est pas dans l'aéroport. Dans ce cas, l'unité de traitement 6 peut comprendre un serveur web.

Dans un mode de réalisation, les étapes 100 à 140 peuvent être mises en œuvre, au moins en partie, par un programme d'ordinateur 51 du téléphone 50. Il peut s'agir par exemple d'une application (par exemple de fidélisation des passagers ou bien seulement dédiée à la mise en œuvre de l'invention) préalablement chargée depuis un serveur web et installée sur le téléphone mobile 50. En variante, les étapes 100 à 140 peuvent être mises en œuvre par des circuits électroniques dédiés.

À l'étape 150, l'unité de traitement 60 analyse les données, pour statuer sur l'état de santé des moteurs 2. L'avion auquel appartiennent ces moteurs peut être identifié à l'aide de l'identifiant de vol. Cette étape doit de préférence utiliser les données transmises par plusieurs téléphones 50 présents dans la cabine 4. Si un défaut est détecté ou suspecté, une opération de maintenance des moteurs 2 peut ensuite être réalisée.

Lors de l'étape 150, un indice de confiance de chaque téléphone mobile (ou passagers) peut être établi par l'unité de traitement 60 par exemple en fonction de la durée de l'acquisition du signal, des impressions de l'utilisateur ou de sa fidélité dans l'utilisation du système.
Bien entendu, l'invention ne se limite pas aux seuls modes de réalisation décrits. Par exemple :
- Les données peuvent être identiques au signal, par exemple lorsque dans la cabine, l'intensité des bruits du moteur est très supérieure à celle des bruits parasites, à tel point qu'il n'est pas nécessaire d'éliminer les éléments du signal obtenus par le capteur indépendants des bruits du moteur.
- L'étape d'émission peut être réalisée à tout moment, dès la fin de l'acquisition ou au fur et à mesure de l'acquisition, pendant le vol.
- L'unité de traitement peut faire partie de l'avion, notamment lorsque l'étape d'acquisition a lieu durant le vol.
- L'étape d'émission ne comprend pas nécessairement l'émission d'un identifiant du vol. Dans ce cas, l'étape 100 n'est forcément pas nécessaire. Par exemple, dans ce cas, l'unité de traitement 60 peut retrouver le vol et donc l'aéronef concerné, à partir du numéro du téléphone 50 dans le réseau de téléphonie mobile ou d'un autre identifiant du téléphone ou du passager, en recherchant dans une base de données le passager associé à ce numéro et le vol sur lequel le passager est enregistré. On peut aussi utiliser les coordonnées GPS ou identifier l'antenne relais, etc.
- D'autres canaux radios qu'un réseau local hertzien ou un réseau wifi sont envisageables. Le canal radio peut ainsi être un réseau de téléphonie mobile. Le déchargement des données peut aussi être manuel.

L'étape 100 n'a pas forcement lieu avant l'étape 110. Elle peut par exemple avoir lieu après l'étape 140 voire même après l'étape 150.

## Revendications

1. Procédé de surveillance d'au moins un moteur (2) d'un aéronef (1), l'aéronef comprenant une cabine de passagers (4), le procédé comprenant les étapes suivantes :
- une étape d'acquisition (110) d'un signal au moins en partie représentatif de l'activité dudit au moins un moteur (2) par au moins un capteur (52), durant un vol de l'aéronef (1), et
- une étape de détermination de la santé (150) dudit au moins un moteur (2) par une unité de traitement (6) à partir de données obtenues à partir du signal,
**caractérisé en ce que** chaque capteur (52) est dans un appareil mobile (50), qui est un téléphone mobile, situé dans la cabine (4),
et la détermination de la santé (150) dudit au moins un moteur utilise le signal acquis par une pluralité de téléphones mobiles (50), et **en ce que** l'étape d'acquisition (110) est initiée et/ou interrompue par l'intermédiaire d'une interface homme machine d'un des téléphones mobiles (50).

2. Procédé selon la revendication 1, **caractérisé en ce que** :
- le signal est un signal acoustique et le capteur (52) est un microphone, ou
- le signal est un signal représentatif de vibrations, et le capteur (52) est un accéléromètre.

3. Procédé selon l'une des revendications 1 ou 2 dans lequel les données sont obtenues à partir du signal par élimination des éléments du signal indépendants de l'activité dudit au moins un moteur (2).

4. Procédé selon l'une quelconque des revendications précédentes, **caractérisé en ce qu'**il comprend en outre une étape d'émission des données (140) par l'appareil mobile (50), par un canal radio, à destination d'une unité de traitement (6) située au sol.

5. Procédé selon la revendication 4, **caractérisé en ce que** l'étape d'émission est réalisée lorsque l'aéronef (1) est au sol.

6. Procédé selon l'une des revendications 4 ou 5, **caractérisé en ce que** l'étape d'émission (140) comprend l'émission d'un identifiant du vol.

7. Procédé selon l'une des revendications 4 à 6, **caractérisé en ce que** l'étape d'émission (140) est réalisée sur détection du canal radio par l'appareil mobile (50).

8. Procédé selon la revendication 7, **caractérisé en ce que** le canal radio est un réseau local hertzien, par exemple un réseau wifi.

## Patentansprüche

1. Verfahren zur Überwachung mindestens eines Motors (2) eines Flugzeugs (1), wobei das Flugzeug eine Passagierkabine (4) umfasst, wobei das Verfahren die folgenden Schritte umfasst:
einen Schritt der Erfassung (110) eines Signals, das zumindest teilweise für die Aktivität des mindestens einen Motors (2) repräsentativ ist, durch mindestens einen Sensor (52) während eines Flugs des Flugzeugs (1), und
- einen Schritt der Bestimmung der Gesundheit (150) des mindestens einen Motors (2) durch eine Verarbeitungseinheit (6) ausgehend von Daten, die ausgehend von dem Signal erhalten wurden,
**dadurch gekennzeichnet, dass** sich jeder Sensor (52) in einer bewegbaren Einrichtung (50) befindet, die ein Mobiltelefon ist und in der Kabine (4) gelegen ist, und die Bestimmung der Gesundheit (150) des mindestens einen Motors das Signal verwendet, das von einer Vielzahl von Mobiltelefonen (50) erfasst wurde, und dadurch, dass der Schritt der Erfassung (110) über eine Mensch-Maschine-Schnittstelle eines der Mobiltelefone (50) eingeleitet und/oder unterbrochen wird.

2. Verfahren nach Anspruch 1, **dadurch gekennzeichnet, dass**:
- das Signal ein akustisches Signal ist und der Sensor (52) ein Mikrofon ist, oder
- das Signal ein Signal ist, das für Schwingungen repräsentativ ist, und der Sensor (52) ein Beschleunigungsmesser ist.

3. Verfahren nach einem der Ansprüche 1 oder 2, wobei die Daten ausgehend von dem Signal erhalten werden, indem die Elemente des Signals, die unabhängig von der Aktivität des mindestens einen Motors (2) sind, eliminiert werden.

4. Verfahren nach einem der vorstehenden Ansprüche, **dadurch gekennzeichnet, dass** es weiter einen Schritt der Übertragung der Daten (140) über die mobile Einrichtung (50), über einen Funkkanal, an eine Verarbeitungseinheit (6), die sich am Boden befindet, umfasst.

5. Verfahren nach Anspruch 4, **dadurch gekennzeichnet, dass** der Schritt der Übertragung durchgeführt wird, wenn das Flugzeug (1) am Boden ist.

6. Verfahren nach einem der Ansprüche 4 oder 5, **dadurch gekennzeichnet, dass** der Schritt der Übertragung (140) die Übertragung einer Flugkennung umfasst.

7. Verfahren nach einem der Ansprüche 4 bis 6, **dadurch gekennzeichnet, dass** der Schritt der Übertragung (140) bei Erfassung des Funkkanals durch die mobile Einrichtung (50) durchgeführt wird.

8. Verfahren nach Anspruch 7, **dadurch gekennzeichnet, dass** der Funkkanal ein lokales Funknetzwerk, beispielsweise ein Wifi-Netzwerk, ist.

## Claims

1. A method for monitoring at least one engine (2) of an aircraft (1), the aircraft comprising a passenger cabin (4), the method comprising the following steps:
- a step of acquiring (110) a signal at least in part representative of the activity of said at least one engine (2) by at least one sensor (52) during a flight of the aircraft (1), and
- a step of determining the health (150) of said at least one engine (2) by a processing unit (6) from data obtained from the signal, **characterized in that** each sensor (52) is in a mobile device (50), which is a mobile phone, located in the cabin (4), the determination of the health (150) of said at least one engine uses the signal acquired by a plurality of mobile phones (50), and **in that** the acquisition step (110) is initiated and/or interrupted via a human-machine interface of one of the mobile phones (50).

2. The method according to claim 1, **characterized in that**:
- the signal is an acoustic signal and the sensor (52) is a microphone, or
- the signal is a signal representative of vibrations, and the sensor (52) is an accelerometer.

3. The method according to one of claims 1 or 2, wherein the data is obtained from the signal by eliminating the elements of the signal that are independent of the activity of said at least one engine (2).

4. The method according to any one of the preceding claims, **characterized in that** it further comprises a step of transmitting the data (140) by the mobile device (50), via a radio channel, to a processing unit (6) located on the ground.

5. The method according to claim 4, **characterized in that** the transmission step is performed when the aircraft (1) is on the ground.

6. The method according to one of claims 4 or 5, **characterized in that** the transmission step (140) comprises transmitting a flight identifier.

7. The method according to one of claims 4 to 6, **characterized in that** the transmission step (140) is performed upon detection of the radio channel by the mobile device (50).

8. The method according to claim 7, **characterized in that** the radio channel is a local wireless network, for example a Wi-Fi network.
